Europäisches Patentamt

(19) European Patent Office

Office européen des brevets

(11) Numéro de publication: **0 222 628 B1**

# FASCICULE DE BREVET EUROPÉEN

(45) Date de publication du fascicule du brevet: **23.11.88**

(51) Int. Cl.⁴: **B 62 D 1/18,** F 16 B 2/18

(21) Numéro de dépôt: **86402041.7**

(22) Date de dépôt: **17.09.86**

(54) **Dispositif de fixation pour une pièce tubulaire, en particulier pour une colonne de direction de véhicule.**

(30) Priorité: **30.09.85 FR 8514471**

(43) Date de publication de la demande:
**20.05.87 Bulletin 87/21**

(45) Mention de la délivrance du brevet:
**23.11.88 Bulletin 88/47**

(84) Etats contractants désignés:
**AT BE CH DE GB IT LI LU NL SE**

(56) Documents cité:
**FR-A-2 360 454**
**FR-A-2 491 024**
**GB-A-1 523 638**
**GB-A-2 033 855**
**GB-A-2 116 496**

(73) Titulaire: **ECIA - EQUIPEMENTS ET COMPOSANTS POUR L'INDUSTRIE AUTOMOBILE, F-25400 Audincourt (FR)**

(72) Inventeur: **Clerc, Michel, 27 Rue des Graviers, F-25700 Valentigney (FR)**
Inventeur: **Hoblingre, André, 28 Rue Vincent d'Indy, F-25700 Valentigney (FR)**
Inventeur: **Barnabe, Jean- Pierre, 17 Combe Saint-Germain, F-25700 Valentigney (FR)**
Inventeur: **Mouhot, Frédéric, 5 Rue des Vergers, F-25460 Voujeaucourt (FR)**

(74) Mandataire: **Moncheny, Michel, c/o Cabinet Lavoix 2 Place d'Estienne d'Orves, F-75441 Paris Cedex 09 (FR)**

## Description

L'invention concerne un dispositif de fixation pour une pièce tubulaire, en particulier pour une colonne de direction de véhicule réglable par pivotement et/ou par déplacement axial.

On connaît des colonnes de direction de vehicules automobiles réglables en hauteur par pivotement autour d'un axe horizontal situé au niveau de l'articulation de la partie supérieure de l'arbre de direction. On connaît également des colonnes de direction à réglage, dans la direction axiale, par déplacement relatif télescopique de certains de leurs éléments.

Ces colonnes de direction réglables qui permettent un meilleur confort et une plus grande sécurité lors de la conduite doivent comporter des moyens facilement accessibles et facilement manoeuvrables par le conducteur pour lui permettre d'effectuer le déblocage de la colonne avant son réglage et le blocage en position de celle-ci, lorsque le conducteur à amené la colonne dans sa position idéale pour la conduite.

On à déjà proposé des dispositifs de fixation de colonnes de direction comportant un support fixé sur une partie de la carosserie du véhicule à proximité du volant et constitué de deux flasques latéraux sensiblement parallèles reliés entre eux de façon à constituer une structure en forme de U. Cette structure déformable par rapprochement ou éloignement des flasques latéraux permet la fixation de la colonne de direction, par serrage entre ces flasques d'une pièce intermédiaire dans laquelle passe la colonne. Cette pièce intermédiaire peut assurer à la fois la fixation en hauteur de la colonne de direction et son serrage pour eviter des déplacements axiaux relatifs de ses éléments constituants. Le serrage des flasques transmis à la pièce intermédiaire peut être assuré grâce à un tirant ou une tige filetée traversant les flasques latéraux du support dans une direction transversale par rapport à la colonne et comportant des butées à ses extrémités situées à l'extérieur et de part et d'autre des flasques. L'une de ces butées peut être constituée par exemple par un écrou engagé sur la tige filetée et solidaire d'une poignée ou d'un bouton d'actionnement permettant de le faire tourner pour obtenir le serrage ou le desserrage des flasques (comme connu par ex. de FR-A-2 491 024 ou GB-A-2 333 855). Dans un tel dispositif cependant, l'efficacité de la fixation dépend du couple exercé par le conducteur sur la poignée ou le bouton. La force de serrage et donc l'efficacité de la fixation est essentiellement variable d'un conducteur à un autre. D'autre part, de tels dispositifs peuvent se détériorer par grippage, oxydation ou formation de dépôt sur les filetages.

On à également proposé des dispositifs de serrage constitués par des cames ou excentriques solidaires d'une poignée de commande et en appui d'une part sur l'une des butées à l'extrémité du tirant et d'autre part sur la face externe du flasque corresponda· .oir FR-A-2 360 454 ou GB-A-1 523 638). Le dé; :ement relatif de la butée et de la came ou excentrique permet alors d'exercer une tension dans le tirant qui assure le serrage des flasques. Les cames ou excentriques utilisés peuvent comporter deux points extrêmes correspondant respectivement au serrage ou au desserrage du dispositif de fixation. De tels dispositifs subissent cependant une certaine usure au cours du temps et doivent faire l'objet de réglages assez fréquents pour maintenir constante la force de serrage exercée par le tirant. Il est d'autre part difficile de matérialiser parfaitement le point de serrage et le point de desserrage, si bien que l'efficacité de la fixation n'est pas toujours parfaitement indépendante de la force exercée par le conducteur sur la poignée de commande.

Enfin, les dispositifs de fixation connus ne permettent pas de transmettre à la carrosserie, de façon simple et efficace, les couples qui peuvent être transmis à la colonne par l'arbre de direction, lorsque ceux-ci sont rendus solidaires en rotation par le dispositif antivol du véhicule.

Le but de l'invention est donc de proposer un dispositif de fixation pour une pièce tubulaire, en particulier pour une colonne de direction de véhicule, réglable de façon continue par pivotement et/ou par déplacement axial télescopique, comportant un support muni de moyens pour sa fixation rigide sur une partie fixe telle que la carrosserie d'un véhicule et constitué de deux flasques latéraux sensiblement parallèles reliés entre eux à l'une de leurs extrémités de façon à constituer une structure en forme de U déformable par rapprochement ou éloignement des flasques, assurant la fixation de la pièce tubulaire par serrage d'un support intermédiaire dans lequel passe la pièce tubulaire, grâce à un tirant traversant les flasques latéraux dans une direction transversale et muni de deux butées d'appui à ses extrémités situées à l'extérieur et de part et d'autre des flasques latéraux et grâce à au moins un dispositif de serrage commandé par une poignée, en appui sur l'une des butées et sur la face externe du flasque correspondant, pour rapprocher les flasques dans la direction transversale ou au contraire permettre leur écartement par retour élastique, dispositif de fixation dont l'efficacité soit totalement indépendante de la force exercée par le conducteur, qui soit pratiquement indérégable et qui présente une très grande résistance à l'usure et aux autres sollicitations mécaniques en service.

Dans ce but, le dispositif de serrage est réalisé sous la forme d'un dispositif à genouillère bistable ayant trois axes d'articulation parallèles entre eux et perpendiculaires à la direction axiale du tirant, constitué par deux leviers percés sur toute leur épaisseur et enfilés avec jeu sur le tirant, l'un à la suite de l'autre entre une extrémité de ce tirant comportant une butée ayant une surface d'articulation et une pièce d'appui sur le flasque latéral enfilée sur le tirant et comportant une surface d'articulation dirigée à l'opposé du flasque latéral, chacun des leviers comportant, sur une de leurs faces transversales par rapport à l'axe du tirant, une surface d'articulation (mâle ou femelle) et sur leur autre face transversale une autre surface d'articulation (mâle ou femelle), et sur leurs faces en regard, chacun deux surfaces d'appui planes destinées à coopérer chacune avec une surface correspondante de l'autre levier,

le premier levier, situé vers l'extérieur, étant solidaire de la poignée de manoeuvre et étant librement engagé par une de ses surfaces d'articulation (mâle ou femelle) sur la surface d'articulation du tirant et par son autre surface d'articulation sur la surface d'articulation correspondante du second levier,

le second levier étant librement engagé par l'une de ses surfaces d'articulation (mâle ou femelle) sur la surface d'articulation correspondante du premier levier et par son autre surface d'articulation sur la surface d'articulation de la pièce d'appui,

les surfaces d'appui correspondantes des leviers étant inclinées et les axes des surfaces d'articulation disposées sur les leviers de telle sorte que, dans une première position d'appui des leviers ou position de serrage, les trois axes d'articulation soient sensiblement coplanaires et que, dans une seconde position d'appui des leviers ou position desserrée, l'axe d'articulation intermédiaire soit nettement en dehors du plan défini par les deux autres axes, les déplacements d'une position à l'autre étant obtenus par basculement du premier levier, dans un sens ou dans l'autre, grâce à la poignée, jusqu'à la mise en butée des surfaces d'appui correspondantes.

De façon préférentielle, la pièce intermédiaire par laquelle est assuré le serrage de la colonne ou pièce tubulaire est conçue en elle-même ou en association avec des moyens de clavetage, de telle sorte que les couples transmis à la colonne de direction soient repris par la carrosserie du véhicule, de façon la plus directe possible, en utilisant le support du dispositif de fixation.

Afin de bien faire comprendre l'invention on va maintenant décrire à titre d'exemples non limitatifs, plusieurs modes de réalisation d'un dispositif de fixation suivant l'invention appliqué au cas de colonnes de direction de véhicule à réglage par pivotement et/ou par déplacements axiaux télescopiques.

La figure 1 est une vue latérale d'une colonne de direction à reglage en hauteur par pivotement.

La figure 2 est une vue de dessus de la colonne de direction représentée à la figure 1 avec demi-coupe axiale suivant BB de la figure 1.

La figure 3 est une vue en coupe transversale du dispositif de fixation de la colonne de direction représentée sur les figures 1 et 2.

La figure 4a est une vue en coupe transversale du premier levier du dispositif de serrage représenté à la figure 3.

La figure 4b est une vue suivant B de la figure 4a.

La figure 5a est une vue en coupe transversale du second levier du dispositif de serrage représenté à la figure 3.

La figure 5b est une vue suivant B de la figure 5a.

La figure 6a est une vue en coupe transversale de la pièce d'appui du dispositif de serrage représenté sur la figure 3.

La figure 6b est une vue suivant B de la figure 6a.

La figure 7a est une vue de dessus du tirant du dispositif de serrage représenté sur la figure 3.

La figure 7b est une vue suivant B du tirant représenté sur la figure 1a.

Les figures 8a, 8b et 8c sont des représentations schématiques à plus grande échelle des éléments constituant le dispositif de serrage, dans différentes positions relatives montrant le fonctionnement de ce système bistable à genouillère.

La figure 9 est une vue en perspective de la pièce de support intermédiaire de la colonne de direction représentée aux figures 1 et 2.

La figure 10 est une vue en coupe axiale d'une colonne de direction réglable par pivotement et par déplacement axial télescopique, munie d'un dispositif de fixation suivant l'invention.

La figure 11 est une vue en coupe suivant AA de la figure 10 du support intermédiaire de la colonne de direction.

La figure 11a est une vue suivant A de la figure 11.

La figure 12 est une vue en coupe axiale partielle d'une colonne de direction réglable par pivotement et par déplacement axial télescopique muni d'un dispositif de fixation suivant l'invention et suivant une variante.

La figure 13 est une vue en coupe suivant AA de la figure 12.

La figure 14 est une vue latérale d'une des deux plaques de guidage constituant le support intermédiaire de la colonne de direction représentée sur les figures 12 et 13.

La figure 14a est une coupe suivant AA de la figure 14.

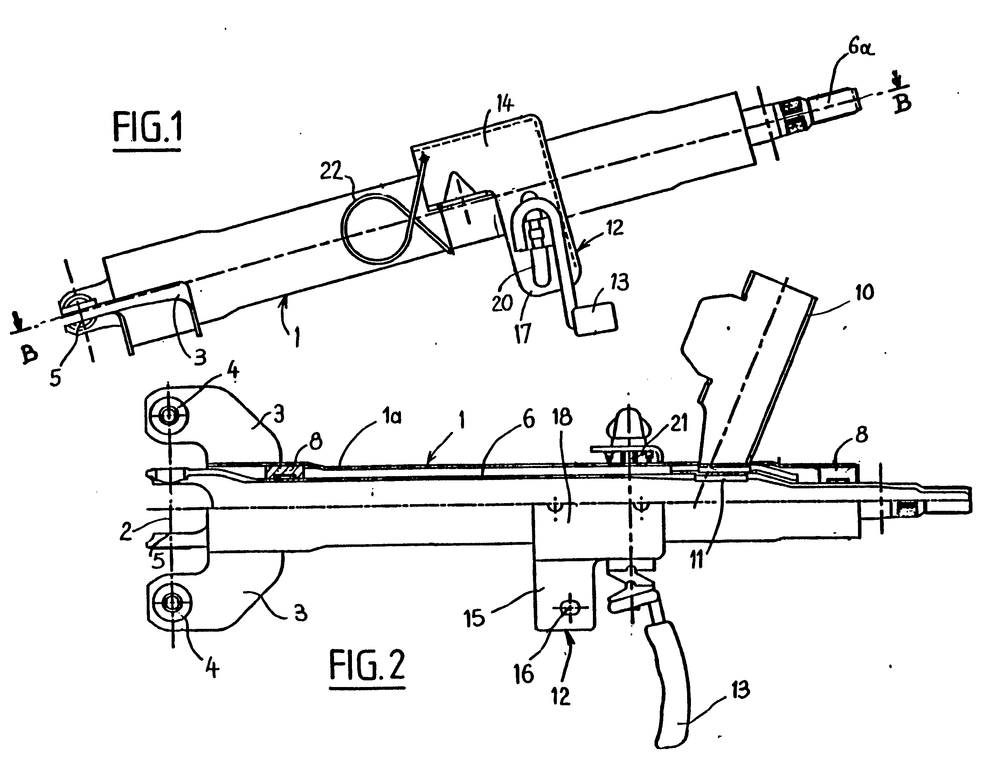

Sur les figures 1 et 2, on voit une colonne de direction 1 réglable en hauteur par pivotement autour d'un axe horizontal 2 passant par les axes de deux points d'attache de la colonne 1 sur la carrosserie du véhicule. Le tube externe la de la colonne 1 est solidaire, à sa partie inférieure, de deux pattes d'attache 3 percées de trous permettant la fixation de la colonne sur la carrosserie par l'intermédiaire de vis passant dans l'alésage central de deux entretoises élastiques 4 en élastomère. Cette fixation souple permet un léger pivotement de la colonne 1 pour son reglage autour de l'axe 2. Cet axe 2 est confondu avec l'axe du joint universel 5 reliant la partie supérieure 6 de l'arbre de direction à la partie intermédiaire de cet arbre non représentée. La colonne de direction 1 est donc réglable en hauteur par pivotement autour d'un axe confondu avec l'axe d'accouplement de l'arbre de direction 6 qui est monté rotatif à l'intérieur du tube la de la colonne 1 par l'intermédiaire de paliers à roulement 8.

Sur la figure 1, la colonne de direction 1 a été représentée dans la position inclinée qu'elle occupe à l'intérieur du véhicule, cette inclinaison pouvant être réglée entre certaines limites par le conducteur, ainsi qu'il sera décrit par la suite. Le volant non représenté est rendu solidaire de la partie supérieure 6a de l'arbre de direction.

Comme il est visible sur la figure 2, la colonne de direction 1 porte un boîtier antivol 10 destiné à recevoir une serrure dont le pène s'engage pour réaliser le blocage de l'arbre de direction, dans une ouverture 11 prévue dans la partie supérieure de cet arbre de direction 6.

La colonne 1 est engagée à l'intérieur du dispositif de fixation selon l'invention désigné de façon générale par le repère 12. Ce dispositif permet de réaliser le déblocage de la colonne pour effectuer son réglage d'inclinaison puis le blocage de cette colonne lorsque le réglage à été effectué, grâce à une poignée de manoeuvre 13 facilement accessible depuis le poste de conduite.

Le dispositif 12 comporte un support 14 muni de deux pattes telles que 15 permettant la fixation du support 14 sur la carrosserie du véhicule grâce à des vis engagées dans des trous 16 traversant les pattes 15. Le support 14, dont une moitié seulement est visible sur les figures 1 et 2, est réalisé sous une forme entièrement symétrique par rapport au plan axial de symétrie de la colonne de direction, par pliage d'une tôle d'acier. Ce support comporte deux flasques latéraux 17 et un partie de jonction 18 entre les flasques latéraux 17 constituant avec ces flasques une structure à section en forme de U entre les branches duquel est engagée la colonne 1.

Chacun des flasques 17 placés verticalement lorsque le support 14 est en place sur la carrosserie du véhicule comporte une lumière de guidage 20 limitée par deux arcs de cercle ayant un centre commun sur l'axe 2. Les lumières de guidage réalisées dans les flasques 17 sont symétriques l'une de l'autre par rapport au plan de symétrie axial et vertical de la colonne. Un tirant 21 à section carrée ou rectangulaire est engagé avec jeu dans les lumières 20, à chacune de ses extrémités, et permet ainsi de guider la pièce intermédiaire de support de la colonne 1 qui sera décrite ci-après, pendant le pivotement de la colonne.

Le support 14 porte également un ressort 22 assurant le support de la colonne 1 pour éviter sa retombée lors du déblocage du dispositif 12. Ce ressort 22 est engagé par ses extrémités dans les parties latérales du support 14 et soutient la colonne 1 par sa partie centrale.

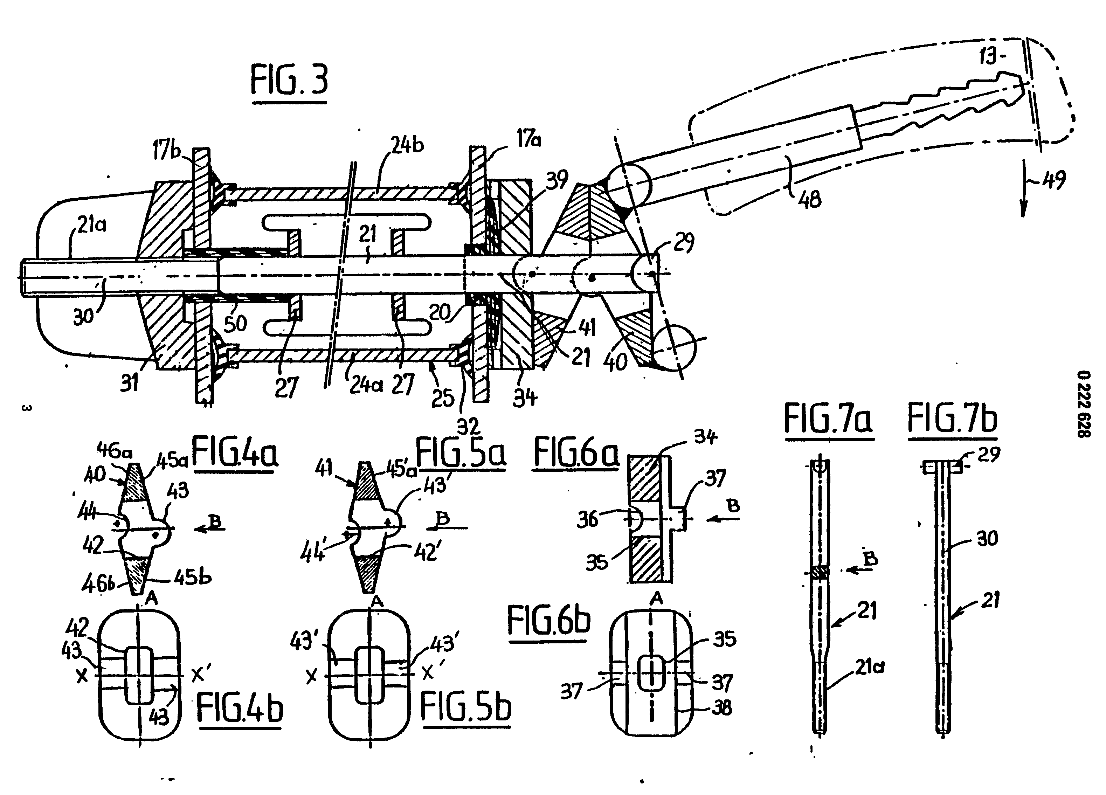

On va maintenant se reporter à la figure 3 ainsi qu'aux figures 4 à 7 pour décrire plus en détail le dispositif de fixation suivant l'invention désigné de façon générale par le repère 12 et associé à la colonne de direction représentée aux figures 1 et 2.

Sur la figure 3, on voit une coupe de l'ensemble du dispositif suivant un plan de symétrie passant par l'axe du tirant 21 à section carrée qui est engagé dans les flasques verticaux 17a et 17b qui constituent les parties latérales disposées suivant les branches du U de la section du support 14.

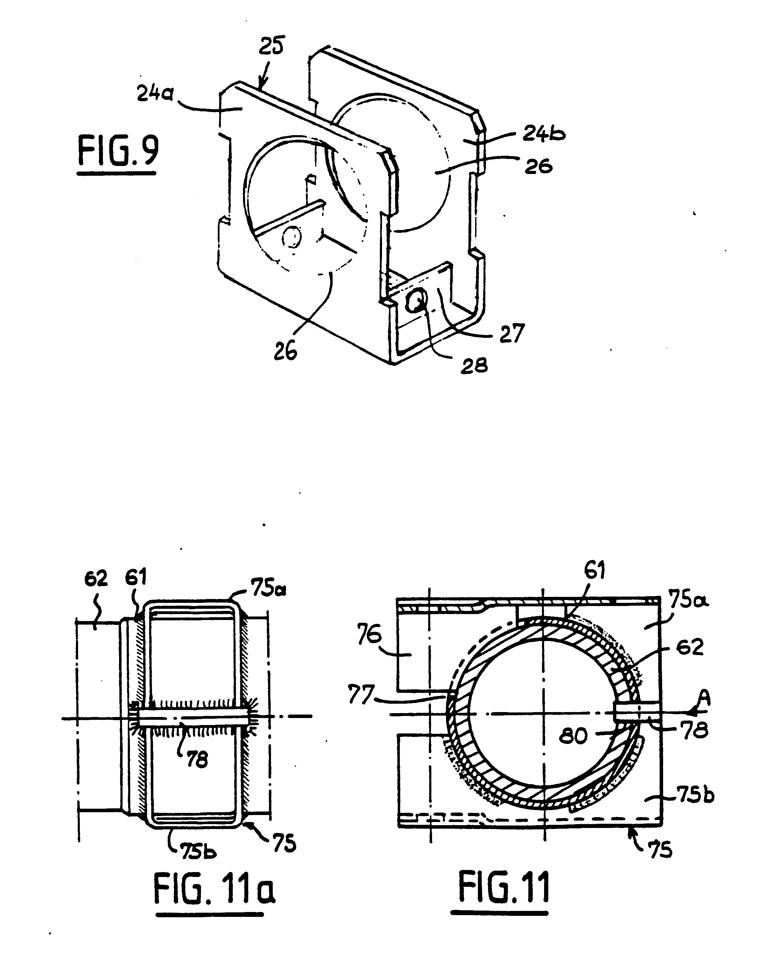

Le tube externe la de la colonne 1 est solidaire d'une pièce de support intermédiaire 25 représentée sur la figure 9. Cette pièce réalisée en tôle pliée comporte deux flasques opposés et parallèles 24a et 24b percés d'ouvertures circulaires 26 permettant le passage du tube externe 1a de la colonne de direction 1 qui est fixée par soudure sur les flasques 24a et 24b, le long du contour des ouvertures 26. Le support intermédiaire 25 comporte également deux pattes 27 obtenues par pliage et de direction perpendiculaire aux flasques 24a et 24b, chacune percée d'une ouverture 28 permettant le passage du tirant 21.

Comme il est visible sur la figure 3 et sur les figures 7a et 7b, le tirant 21 comporte à l'une de ses extrémités une butée 29 constituant une surface d'articulation semi-cylindrique mâle dont l'axe est perpendiculaire à l'axe longitudinal 30 du tirant 21 et concourant avec cet axe. L'autre extrémité 21a du tirant 21 est filetée et un écrou de serrage auto- freiné 31 est engagé sur cette extrémité filetée de façon à venir en butée sur la face externe du flasque 17b du support 14. Le support intermédiaire 25 de la colonne 1 est engagé entre les flasques 17a et 17b avec interposition entre les bords des flasques 24 et des flasques 17, de quatre patins de glissement 32. La fixation de la colonne 1 solidaire du support intermédiaire 25 est assurée par serrage des flasques 24a et 24b entre les flasques 17a et 17b, en exerçant une traction longitudinal sur le tirant 21 grâce à un dispositif de serrage intercalé entre la butée 29 et une pièce d'appui 34 en contact avec la face externe du flasque 17a du support 14. La pièce d'appui 34 ainsi qu'il est visible sur les figures 36a et 6b comporte une ouverture centrale 35 de forme rectangulaire ou carrée la traversant de part en part et permettant le passage du tirant 21 de section rectangulaire ou carrée ainsi qu'une surface d'articulation cylindrique femelle 36 en deux parties dont l'axe est concourant avec l'axe de l'ouverture 35 correspondant à l'axe 30 du tirant 21. La pièce 34 comporte également deux rebords de guidage 37 situés de part et d'autre d'une saignée 38 permettant de disposer à l'intérieur de celle-ci une pièce élastique 39 engagée dans la lumière 20 du flasque 17a et en contact avec la face externe de ce flasque.

Le dispositif de serrage proprement dit est constitué par deux leviers 40 et 41 visibles sur les figures 4a, 4b et 5a, 5b respectivement.

Le levier 40 comporte une ouverture centrale 42 de forme rectangulaire dont la largeur est très peu supérieure au côté de la section du tirant 21 et dont la longueur permet un débattement de ce levier 40 lorsqu'il est enfilé sur le tirant 21. Le levier 40 comporte également une surface d'articulation mâle cylindrique 43 et une surface d'articulation femelle cylindrique 44 situées sur deux faces opposées du levier 40 et ayant des axes placés de part et d'autre du plan de symétrie du levier de trace XX' sur la figure 4b. Le levier 40 comporte de plus deux surfaces d'appui planes inclinées 45a et 45b sur l'une de ses faces et deux autres surfaces inclinées 46a et 46b sur son autre face.

Le levier 41 comporte une ouverture 42', des surfaces d'articulation 43' et 44' ainsi que des surfaces inclinées 45'a, 45'b, 46'a et 46'b équivalant à l'ouverture et aux surfaces d'articulation et d'appui qui ont été décrites pour le levier 40. Cependant, la disposition des axes des surfaces d'articulation 43' et 44' est inversée par rapport à la disposition des axes des surfaces d'articulation 43 et 44 par rapport au plan de symétrie de trace XX'.

Le montage des leviers 40 et 41 entre la butée 29 et la pièce d'appui 34 est visible sur la figure 3 où les leviers ont été représentés dans la position de serrage; une force de traction est alors appliquée par les leviers sur le tirant 21, entre la butée 29 et l'écrou 31. La déformation élastique du tirant permet d'exercer une force de serrage entre les flasques 17a et 17b par l'intermédiaire des leviers et de la pièce d'appui 34.

Le passage de la position de serrage à la position de desserrage s'obtient par basculement dans le sens de la flèche 49, du levier 48 solidaire de la poignée 13 et soudé sur le levier d'actionnement 40.

Le montage du dispositif est obtenu par un simple engagement des surfaces d'articulation cylindriques correspondantes, mâles et femelles, les unes dans les autres, le vissage de l'écrou 31 assurant l'assemblage des différentes parties du dispositif de serrage. Cet écrou 31 permet également de régler à une valeur déterminée la force de traction exercee sur le tirant 21, au moment du serrage. Une pièce élastique tubulaire 50 en élastomère intercalée entre l'écrou et l'une des pattes 27 du support intermédiaire 25 permet en combinaison avec la pièce élastique 39 d'obtenir une souplesse supplémentaire du dispositif lors du verrouillage et une action de déverrouillage plus nette, ces pièces jouant le rôle de ressort de rappel.

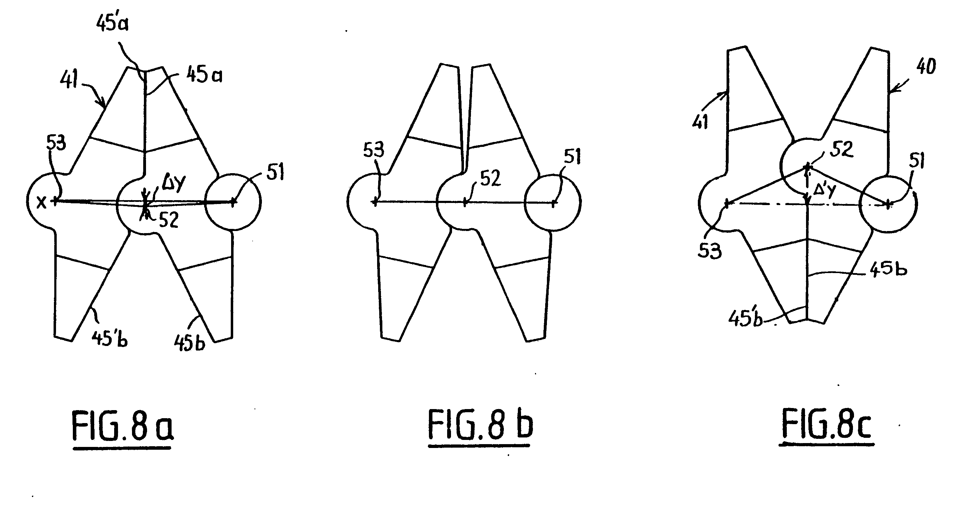

Sur les figures 8a, 8b et 8c, on voit la position relative des axes 51, 52 et 53 des trois articulations constituées par l'assemblage des éléments constitutifs du dispositif de serrage, lors de trois phases différentes des opérations de serrage ou de desserrage.

La figure 8a correspond à la position stable de serrage du dispositif, la figure 8b correspond au passage à la position de serrage maximum constituant un point dur lors de la manoeuvre et la figure 8c correspond à la position stable de desserrage du dispositif. Il apparaît que le dispositif de serrage suivant l'invention fonctionne comme un système à genouillère dont les trois axes parallèles passent d'une position de serrage où ils sont pratiquement coplanaires, la distance entre les axes extrêmes 51 et 53 étant alors maximale, à une position de desserrage où l'axe intermédiaire 52 est situé nettement en dehors du plan défini par les axes extrêmes 51 et 53.

Les surfaces d'appui correspondantes du levier externe 40 et du levier interne 41 situées sur leurs faces en regard permettent grâce à une inclinaison définie par rapport au plan contenant les axes d'articulation, d'assurer une mise en butée des leviers 40 et 41, à la fin du mouvement de serrage, de telle façon que l'axe 52 soit alors situé en-dessous du plan défini par les axes 51 et 53 et à une très faible distance $\Delta Y$ de ce plan. De la même façon, les surfaces d'appui 45b et 45'b des leviers 40 et 41 respectivement sont telles qu'en fin de desserrage, l'axe 52 se trouve nettement au-dessus du plan défini par les axes 51 et 53. La distance $\Delta'Y$ de l'axe 52 au plan défini par les axes 51 et 53 est alors très supérieure à la distance $\Delta Y$. Entre ces deux positions de fin de course, le dispositif passe par la position de serrage maximum ou point dur représentée sur la figure 8b. L'axe 52 est alors exactement dans le plan défini par les axes 51 et 53. Ce passage par le point dur permet d'introduire un déclic dans le fonctionnement du dispositif au moment du serrage. Le serrage ne dépend que de la tension du tirant 21 qui, elle-même, est toujours identique dans la position des leviers 40 et 41 correspondant au serrage. Ces leviers sont amenés automatiquement dans leur position extrême de serrage par une manoeuvre de la poignée 13 et du levier 48 demandant une force d'actionnement qui est toujours la même et qui est choisie dans des limites permettant la manoeuvre du dispositif sans difficulté.

La force de serrage est transmise aux flasques 17a et 17b par la pièce d'appui 34 et l'écrou 31, ce qui produit un rapprochement des flasques 17a et 17b par déformation élastique du support 14. Les flasques 24a et 24b du support intermédiaire 25 sont donc serrés entre les flasques 17a et 17b; la fixation de la colonne 1 est ainsi assurée. Les patins 32 se déforment élastiquement au serrage et permettent d'obtenir un glissement gras, pour les déplacements de la colonne.

Au desserrage, les flasques 17a et 17b reviennent à leur position d'écartement normal grâce à l'élasticité du boîtier 14 et aux patins 32 et le support 25 est libéré, ce qui permet de déplacer la colonne 1 par pivotement autour de l'axe 2, ce mouvement étant guidé par le déplacement du tirant 21 à l'intérieur des lumières 20 du boîtier 14. Lorsqu'une nouvelle position de réglage a été choisie, on réalise de nouveau le serrage du support intermédiaire 25 par manoeuvre de la poignée 13. Au desserrage, la libération du support intermédiaire 25 est facilitée par les dispositifs élastiques 39 et 50 et les patins 32.

On pourra remarquer que le montage du support intermédiaire 25 à l'intérieur du support fixe 14 permet une reprise directe des couples exercés sur la colonne de direction 1, au niveau

**0 222 628**

du support 14 fixé sur la carrosserie. En effet, le tube la de la colonne est solidaire du boîtier 25 qui est retenu entre les flasques 17 du boîtier 14. Lorsque le pène du boîtier antivol 10 est engagé dans l'ouverture 11 de l'arbre de direction 6 et dans l'ouverture située en regard du tube externe 1a, l'arbre et le tube de colonne sont alors rendus solidaires en rotation autour de l'axe de la direction. Si un effort important est alors exercé sur le volant, par exemple en cas d'effraction du véhicule, le couple est alors transmis directement au support 14 qui se trouve à proximité du boîtier antivol 10, suivant la longueur de la colonne de direction 1. Les efforts sont donc transmis à la carrosserie d'une façon telle que le tube externe la de la colonne de direction ne subisse pas d'effort pouvant provoquer sa détérioration.

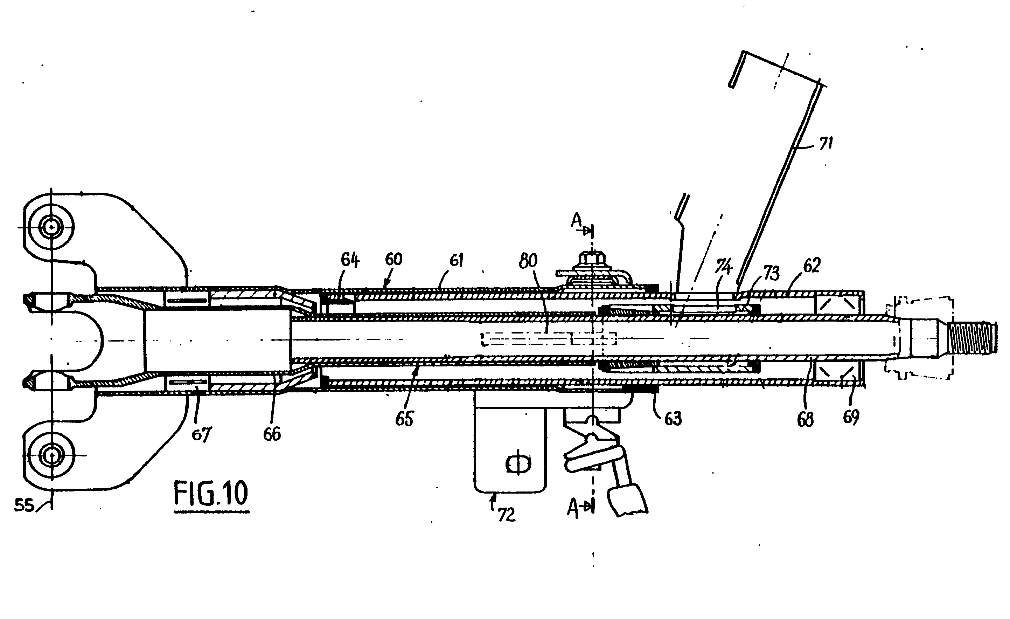

Sur la figure 10 on voit une colonne de direction 60 dont le montage permet un réglage à la fois par pivotement autour d'un axe 55 confondu avec l'axe de l'articulation de l'arbre de direction, comme on l'a décrit plus haut en se référant aux figures 1 et 2 et par déplacement télescopique, comme il sera décrit ci-dessous. Le tube externe de la colonne 60 est constitué par un corps de colonne 61 et par un tube de réglage 62 monté de façon télescopique par l'intermédiaire de joints segments 63 et 64 à l'intérieur du corps de colonne 61.

De la même façon, l'arbre de direction 65 est monté de façon télescopique et comporte une partie inférieure 66 montée rotative par l'intermédiaire d'un palier à roulements 67 dans le corps de colonne 61 et une partie supérieure 68 montée glissante dans la direction axiale à l'intérieur de la partie inférieure 66 et montée librement rotative et solidaire en translation du tube coulissant 62 à l'intérieur de ce tube, par l'intermédiaire d'un palier 69. Les deux parties télescopiques 66 et 68 de l'arbre de direction sont montées solidaires en rotation autour de l'axe de la direction grâce à des cannelures correspondantes usinées sur leurs surfaces internes et externes respectivement.

La partie coulissante 62 du tube externe de la colonne de direction porte le boîtier antivol 71 et la partie supérieure 68 de l'arbre de direction porte un manchon de verrouillage 73 percé d'une ouverture 74 permettant l'engagement du pène du dispositif de verrouillage antivol.

La fixation de la colonne de direction après réglage par pivotement ou par déplacement télescopique ou par une combinaison de ces deux mouvements peut être assurée grâce à un dispositif de fixation 72 suivant l'invention qui est pratiquement identique au dispositif décrit précédemment, mises à part la structure et les fonctions de la pièce intermédiaire de support de la colonne de direction.

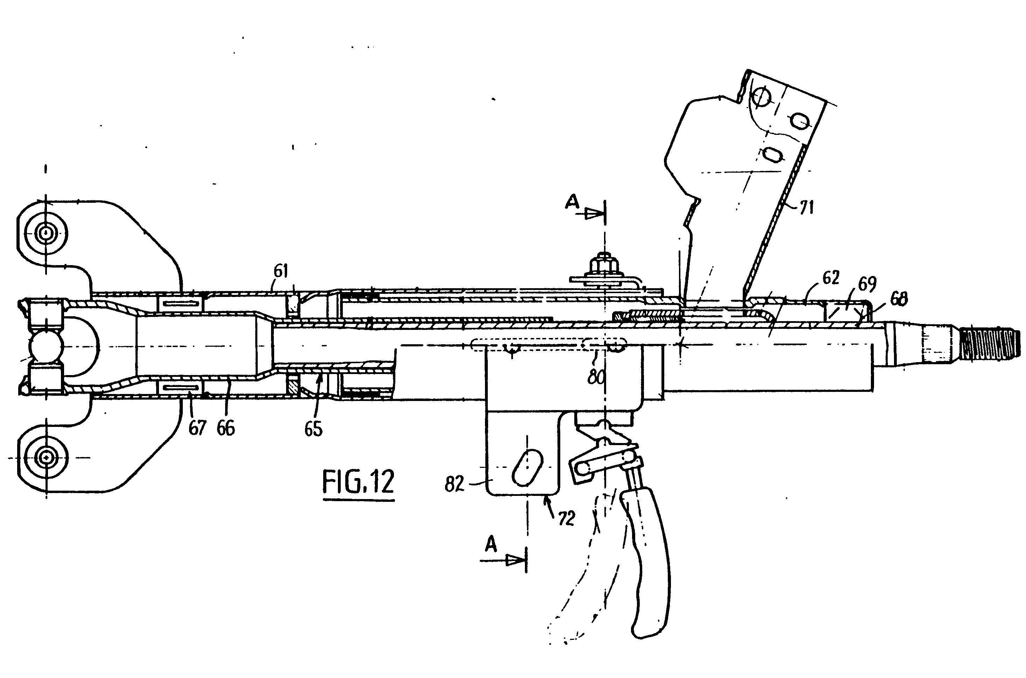

Ce support intermédiaire 75 est représenté sur les figures 11 et 11a. Il comporte deux corps pratiquement symétriques 75a et 75b en tôle pliée et découpée pour réserver un passage intérieur correspondant au corps de colonne 61. Le corps 75b est soudé sur le corps de colonne 61, pratiquement sur toute la longueur de l'ouverture semi-circulaire de passage du corps de colonne.

La partie 75a du support 75 est soudée sur le corps de colonne 61, sur une longueur correspondant approximativement à la moitié de l'ouverture semi-circulaire permettant le passage de ce corps de colonne 61. La partie gauche 76 de ce corps 75a n'est pas soudée sur le corps de colonne 61 et constitue un mors de serrage passant par un jeu d'ouvertures 77 traversant le corps de colonne 61. Le support intermédiaire 75 est monté à l'intérieur du support fixe du dispositif 72 de la même façon que le support 25 dans le mode de réalisation précédemment décrit. Ce support intermédiaire 75 subit donc une pression de serrage tendant à rapprocher ses deux parties 75a et 75b. Cependant, seule la partie 76 du support 75 peut se déplacer par déformation élastique de sa partie de jonction avec la partie restante du corps 75a. Le mors 76 peut alors pénétrer dans les ouvertures 77 du corps de colonne 61 pour venir serrer le tube coulissant 62. On réalise ainsi à la fois la fixation du corps de colonne 61 dans le support fixe du dispositif 72 par serrage du support 75 dans ce support fixe et la fixation du tube coulissant 62 par rapport au support 75 et au corps de colonne 61.

Entre les deux corps 75a et 75b du support intermédiaire 75 est fixée une clavette 78 qui est soudée au corps de colonne 61. Cette clavette 78 est saillante vers l'intérieur du corps de colonne 61 et pénètre dans une lumière 80 traversant la paroi du tube coulissant 62 et dirigée suivant une génératrice de ce tube 62.

La clavette 78 a pour première fonction de guider et de maintenir le tube 62 pendant ses déplacements télescopiques à l'intérieur du corps de colonne 61. Lorsque le pène du dispositif antivol 71 est engagé dans les ouvertures correspondantes du tube 62 et de l'arbre de direction, la clavette 78 permet également de transmettre directement au support fixe du dispositif 72 et donc à la carrosserie un couple qui pourrait être exercé sur l'arbre de direction 65.

Le mode de réalisation du dispositif de fixation appliqué à la colonne de direction représentée aux figures 10 et 11 permet donc de réaliser à la fois par une opération facile et rapide la fixation du corps de colonne par rapport à la carrosserie et la fixation des éléments télescopiques par rapport au corps de colonne. Le dispositif permet de plus de transmettre directement à la carrosserie les couples qui pourraient être exercés sur la colonne de direction, lorsque le verrouillage antivol est réalisé.

Sur la figure 12 à été représenté, dans une vue analogue à celle de la figure 10, un mode de réalisation d'une colonne de direction permettant un réglage par pivotement et par déplacement axial télescopique, comportant des éléments constituants semblables à ceux de la colonne représentée sur la figure 10. Ces éléments correspondants portent les mêmes repères sur les deux figures.

Les différences entre les deux modes de réalisation portent essentiellement sur la réalisation du support intermédiaire de serrage de la colonne, sur son mode de montage à l'intérieur du support fixe 82 du dispositif de fixation 72 et sur les possibilités nouvelles quant à la réalisation du corps de colonne 61.

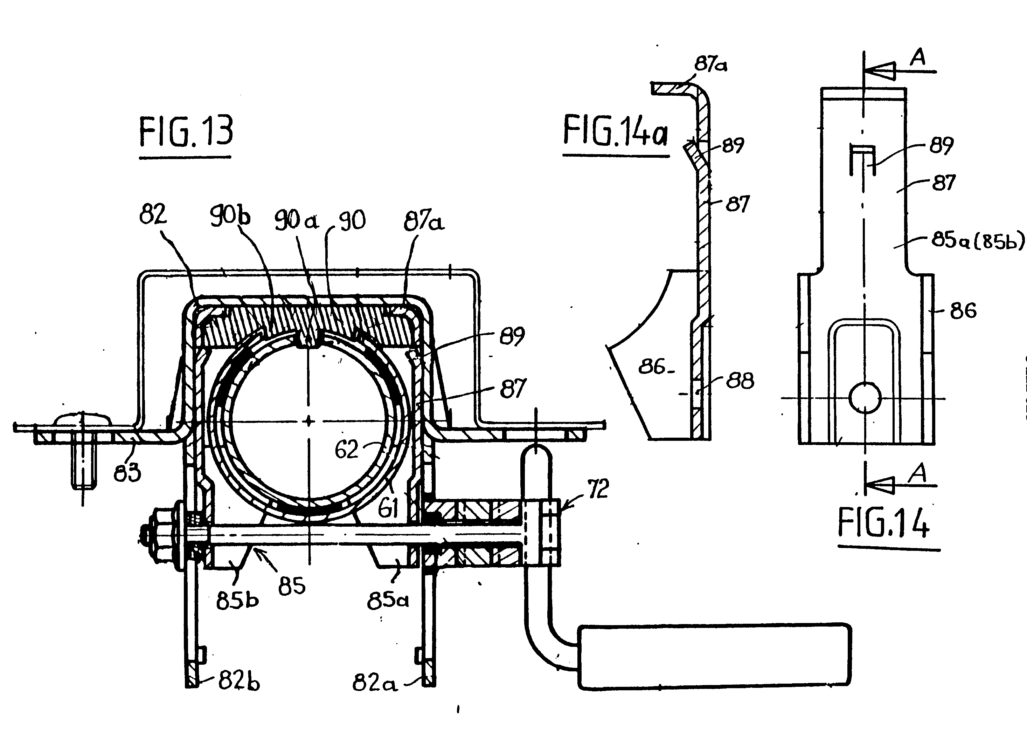

Sur les figures 12 et 13, on voit que le dispositif de fixation 72 est pratiquement identique au dispositif qui à été décrit plus haut. Ce dispositif, pendant son mouvement de serrage, permet le rapprochement des flasques 82a et 82b du support fixe 82 par déformation de celui-ci. Ces flasques 82a et 82b sont en appui sur deux plaques de guidage 85a et 85b constituant le support intermédiaire 85. Le serrage permettant la fixation de la colonne de direction est transmis comme précédemment par l'intermédiaire de ce support 85.

Sur les figures 14 et 14a, on voit une des plaques de guidage 85a ou 85b constituant une des deux parties du support 85. Cette plaque de guidage est constituée par une tôle pliée et comporte deux flasques inférieurs 86 présentant une découpe en portion de cercle dont le rayon correspond au rayon du tube coulissant 62 de la colonne de direction représentée sur la figure 12. Les deux flasques 86 sont reliés par une plaque 87 percée d'une ouverture 88 à sa partie inférieure pour permettre le passage du tirant du dispositif de serrage. La plaque 87 comporte également un onglet 89 rabattu vers l'intérieur et un bord supérieur plié 87a.

Sur la figure 13, on voit la disposition des deux parties séparées 85a et 85b du support intermédiaire 85, à l'intérieur du support fixe 82. Les parties des flasques 86 comportant les découpes en portion de cercle passent à travers le corps de colonne 61, par des lumières prévues dans ce corps de colonne. Une clavette 90 est engagée entre les deux plaques 85a et 85b contre le rebord plié 87a et maintenue en position par l'onglet 89 rabattu vers l'intérieur. Le corps de colonne 61 comporte une découpe au niveau de la clavette 90 qui permet le passage de la saillie de clavetage 90a vers le tube coulissant 62 et la mise en butée du corps de colonne 61 sur des découpes 90b pratiquées dans la clavette 90. La saillie de clavetage 90a pénètre dans une rainure correspondante 80 usinée dans le tube coulissant 62. Le tube coulissant est ainsi guidé et maintenu lors de ses déplacements axiaux et les couples qui pourraient être transmis à l'arbre coulissant 62 par l'arbre de direction 65, lorsque le dispositif antivol est verrouillé, sont absorbés directement par le support 82 qui est fixé sur la carrosserie par l'intermédiaire de vis traversant des pattes de fixation 83.

Dans ce mode de réalisation, le support intermédiaire 85 n'est pas fixé par soudure sur le support de colonne 61 et ce support de colonne ne subit aucun couple venant de l'arbre de direction, par l'intermédiaire de l'arbre coulissant 62. Il est donc possible d'utiliser un support de colonne d'une réalisation particulièrement légère puisque ce corps de colonne ne subit pas de contraintes importantes. D'autre part, aucune liaison métallurgique n'existant entre le corps de colonne et le support intermédiaire, ce corps de colonne peut être réalisé dans une matière différente d'une matière métallique et par exemple en matière plastique.

Il est bien évident que l'invention ne se limite pas aux modes de réalisation qui ont été décrits.

C'est ainsi que la forme et le montage des éléments constituant le dispositif de serrage peuvent être différents et qu'en particulier, la succession des surfaces d'articulation mâles et femelles peut être inversée par rapport à ce qui à été décrit. Il est bien évident également que le dispositif suivant l'invention peut s'appliquer non seulement à des colonnes de direction dont le réglage est effectué par pivotement ou à des colonnes de direction dont le réglage est effectué à la fois par pivotement et par déplacement télescopique mais encore dans le cas de colonnes où le réglage est effectué uniquement par déplacement axial télescopique.

Enfin, le dispositif de fixation suivant l'invention s'applique à la fixation de pièces tubulaires différentes de colonnes de direction, par exemple pour la fixation de dispositifs orientables d'appareils de mesure ou pour l'assemblage de structures facilement démontables.

**Revendications**

1. Dispositif de fixation pour une pièce tubulaire telle qu'une colonne de direction (1) de véhicule réglable de façon continue par pivotement et/ou par déplacement axial télescopique, comportant un support (14) muni de moyens (15, 16) pour sa fixation rigide sur une partie fixe telle que la carrosserie d'un véhicule et constitué de deux flasques latéraux (17) sensiblement parallèles reliés entre eux à l'une de leurs extrémités de façon à constituer une structure en forme de U déformable par rapprochement ou éloignement des flasques (17) assurant la fixation de la pièce tubulaire (1) par serrage d'un support intermédiaire (25) dans lequel passe la pièce tubulaire (1), grâce à un tirant (21) traversant les flasques latéraux (17) dans une direction transversale et muni de deux butées d'appui (29, 31) à ses extrémités situées à l'extérieur et de part et d'autre des flasques latéraux (17) et grâce à au moins un dispositif de serrage commandé par une poignée (13) en appui sur l'une des butées (29) et sur la face externe du flasque (17) correspondant pour rapprocher les flasques (17a, 17b) dans la direction transversale ou au contraire permettre leur écartement par retour élastique, caractérisé par le fait que le dispositif de serrage est réalisé sous la forme d'un dispositif à genouillère bistable ayant trois axes d'articulation (51, 52, 53) parallèles entre eux et perpendiculaires à la direction axiale du tirant (21), constitué par deux leviers (40, 41) percés sur toute leur épaisseur et enfilés avec jeu sur le tirant (21) l'un à la suite de l'autre entre une extrémité de ce tirant comportant une butée (29) ayant une surface d'articulation et une pièce d'appui (34) sur le flasque latéral (17a) enfilée sur le tirant (21) et comportant une surface d'articulation dirigée à l'opposé du flasque latéral (17a) chacun des leviers (40, 41) comportant sur une de leurs faces transversales par rapport à l'axe du tirant (21), une surface d'articulation (mâle ou femelle) (44, 44') et sur leur autre face transversale, une autre surface d'articulation (mâle ou femelle) (43, 43') et sur leurs faces en regard, chacun deux surfaces d'appui planes (45a, 45b et 45'a, 45'b) destinées à coopérer chacune avec une surface correspondante de l'autre levier,

le premier levier, situé vers l'extérieur, étant solidaire de la poignée de manoeuvre et étant librement engagé par une de ses surfaces d'articulation (mâle ou femelle) (43, 44) sur la surface d'articulation (29) du tirant (21) et par son autre surface d'articulation (43, 44) sur la surface d'articulation correspondante (43' 44') du second levier (41),

le second levier (41) étant librement engagé par l'une de ses surfaces d'articulation (mâle ou femelle) (43, 44) sur la surface d'articulation correspondante (43, 44) du premier levier (40) et par son autre surface d'articulation (43' 44') sur la surface d'articulation (36) de la pièce d'appui (34),

les surfaces d'appui correspondantes (45a, 45'a et 45b, 45'b) des leviers (40, 41) étant inclinées et les axes des surfaces d'articulation disposés sur les leviers (40, 41) de telle sorte que, dans une première position d'appui des leviers (40, 41) ou disposition de serrage, les trois axes d'articulation (51, 52, 53) soient sensiblement coplanaires et que, dans une seconde position d'appui des leviers (40, 41) ou position desserrée, l'axe d'articulation intermédiaire (52) soit nettement en dehors du plan défini par les deux autres axes (51, 53), les déplacements d'une position à l'autre étant obtenus par basculement du premier levier (40), dans un sens ou dans l'autre, grâce à la poignée (13), jusqu'à la mise en butée des surfaces d'appui correspondantes (45a, 45'a ou 45b, 45'b).

2. Dispositif de fixation suivant la revendication 1, caractérisé par le fait que le support intermédiaire (25) de la pièce tubulaire (1) est constitué par deux flasques parallèles (24a, 24b) traversés par des ouvertures (26) dans lesquelles est engagée la pièce tubulaire (1) qui est fixée rigidement sur les flasques (24a, 24b) du support intermédiaire, la pièce tubulaire (1) et son support intermédiaire étant engagés entre les flasques (17a, 17b) du support fixe (14) de façon que les flasques (24a, 24b) du support intermédiaire soient sensiblement perpendiculaires aux flasques (17a, 17b) du support fixe (14) et que le serrage du support intermédiaire (25) à l'intérieur des flasques (17) du support fixe (14) soit effectué sur des côtés opposés des flasques (24a, 24b) du support intermédiaire (25).

3. Dispositif de fixation suivant la revendication 2, caractérisé par le fait que le serrage entre les flasques (17a, 17b) du support fixe (14) et les flasques (24a, 24b) du support intermédiaire (25) a lieu par l'intermédiaire de patins souples (32).

4. Dispositif de fixation suivant l'une quelconque des revendications 2 et 3, caractérisé par le fait que le support intermédiaire (25) comporte des pattes (27) percées d'ouvertures pour le passage du tirant (21).

5. Dispositif de fixation suivant l'une quelconque des revendications 1 à 4, caractérisé par le fait que la butée du tirant (21) opposée au dispositif de serrage est constituée par un écrou qui peut être autofreiné (31) engagé sur une partie filetée (21a) du tirant (21) permettant le réglage de la tension du tirant (21).

6. Dispositif de fixation suivant la revendidication 5, caractérisé par le fait qu'une pièce élastique (50) entourant le tirant (21) est intercalée entre l'écrou (31) et le support intermédiaire (25) de la pièce tubulaire (1), pour faciliter le desserrage.

7. Dispositif de fixation suivant la revendication 6, caractérisé par le fait qu'une pièce élastique (39) est intercalée entre la pièce d'appui (34) et le flasque (17a) correspondant du support fixe (14).

8. Dispositif de fixation suivant l'une quelconque des revendications 1 à 7, dans le cas où la pièce tubulaire est une colonne de direction de véhicule réglable de façon continue par pivotement autour d'un axe horizontal, caractérise par le fait que le tirant (21) traverse les flasques (17a, 17b) du support (14) fixé sur la carrosserie du véhicule par des lumiéres (20) limitées par des arcs de cercle centrés sur l'axe de pivotement (2) de la colonne de direction.

9. Dispositif de fixation suivant la revendication 1, dans le cas où la pièce tubulaire est une colonne de direction (60) réglable par pivotement et par déplacement télescopique d'un arbre coulissant (62) dans un corps de colonne (61), caractérise par le fait que le support intermédiaire (75) de la colonne (60) comporte une ouverture permettant de recevoir le corps de colonne (61) auquel il est fixé par soudage sur une partie de la longueur de l'ouverture et au moins une partie (76) formant mors de serrage non fixée sur le corps de colonne (61) et située au niveau d'une ouverture (77) dans le corps de colonne (61) permettant son passage pour le serrage du tube coulissant (62) par déformation élastique du support intermédiaire (75) sous l'effet du serrage par les flasques du support fixe.

10. Dispositif de fixation suivant la revendication 9, caractérisé par le fait qu'une clavette (78) est fixée par soudure sur le corps de colonne (61), traversante par rapport à ce corps de colonne, et comportant une partie dirigée vers l'intérieur du corps de colonne (61) engagée dans une ouverture (80) du tube coulissant (62) pour le guidage de ce tube (62) et la transmission de couple entre le tube coulissant (62) et le support fixe.

11. Dispositif de fixation suivant la revendication 1, dans le cas ou la pièce tubulaire est une colonne de direction de véhicule réglable par pivotement et par déplacement télescopique d'un tube coulissant (62) dans un corps de colonne (61), caractérisé par le fait que le support intermédiaire (85) est constitué par deux plaques d'appui séparées (85a, 85b) comportant chacune une surface d'appui correspondant à la surface cylindrique externe du tube coulissant (62) placée en face d'une découpe correspondante dans le corps de colonne (61), pour constituer des mors de serrage venant en contact avec le tube coulissant (62), lors de l'actionnement du dispositif de serrage (72).

12. Dispositif de fixation suivant la revendication 11, caractérisé par le fait qu'une clavette (90) placée entre les deux parties (85a et 85b) du support intermédiaire (85) comporte une saillie de clavetage (90a) traversant librement une ouverture du corps de colonne (61) et engagée dans une fente (80) traversant la paroi du tube coulissant (62) pour réaliser le guidage axial du tube coulissant (62) et la reprise directe de couple entre le tube coulissant (62) et la carrosserie du véhicule, par l'intermédiare du support fixe (82).

## Patentansprüche

1. Befestigungseinrichtung für ein röhrenförmiges Stück der Art einer durch Schwenken und/oder teleskopartige Axialverschiebung kontinuierlich einstellbaren Kraftfahrzeuglenksäule (1), die aus einem mit Mitteln (15, 16) für ihre starre Befestigung an einem festen Teil, wie der Karosserie eines Fahrzeugs, versehenen und aus zwei seitlichen, ungefähr parallelen, miteinander an einem ihrer Enden unter Ausbildung einer durch ihre Annäherung oder Entfernung verformbaren U-förmigen Anordnung verbundenen Flanschen (17) bestehendem Träger (14) besteht, der die Befestigung des röhrenförmigen Stückes (1) durch Einspannen eines Zwischenträgers (25), in dem das röhrenförmige Stück (1) verläuft, durch eine die seitlichen Flansche (17) in einer Querrichtig durchdringende und an ihren äußeren Enden und beiderseits der seitlichen Flansche (17) mit zwei Abstützungsanschlägen (29, 31) versehene Spannstange (21) und durch mindestens eine durch einen Handgriff (13) betätigte und sich an einem der Anschläge (29) und an der Außenseite des entsprechenden Flansches (17) abstützende Einspannvorrichtung zur Annäherung der Flansche (17a, 17b) aneinander in Querrichtung oder umgekehrt zu deren Entfernung voneinander durch elastische Rückwärtsbewegung ermöglicht, dadurch gekennzeichnet, daß diese Einspannvorrichtung in Form einer bistabilen Kniegelenkvorrichtung mit drei zueinander parallelen und zur Achsenrichtung der Spannstange (21) senkrechten Gelenkachsen (51, 52, 53) ausgebildet ist, die aus zwei durchbrochenen und mit Spiel auf der Spannachse (21) einer hinter dem anderen zwischen einem mit einem eine Gelenkfläche aufweisenden Anschlag (29) versehenen Ende dieser Spannstange und einem auf die Spannstange aufgereihten und eine vom seitlichen Flansch (17a) weggerichtete Gelenkfläche aufweisenden Teil zur Abstützung (34) auf dem seitlichen Flansch (17a) aufgereihten Hebeln (40, 41) besteht, die beide auf einer ihrer quer zur Achse der Spannstange (21) angeordneten Seiten eine (konvexe oder konkave) Gelenkfläche (44, 44') aufweisen und auf ihrer anderen quer verlaufenden Seite eine andere (konvexe oder konkave) Gelenkfläche (43, 43') und auf ihren einander zugewandten Seiten jeder zwei ebene zur Zusammenarbeit mit einer entsprechenden Fläche des anderen Hebels bestimmte Stützflächen (45a, 45b und 45'a, 45'b), wobei der erste, außen angeordnete Hebel mit dem Betätigungshandgriff verbunden ist und durch eine seiner (konvexen oder konkaven) Gelenkflächen (43, 44) auf der Gelenkfläche (29) der Spannstange (21) und durch seine andere Gelenkfläche (43, 44) auf der entsprechenden Gelenkfläche (43', 44') des zweiten Hebels (41) mit Spiel befestigt ist, und der zweite Hebel (41) durch eine seiner (konvexen oder konkaven) Gelenkflächen (43', 44') auf der entsprechenden Gelenkfläche (43, 44) des ersten Hebels (40) und durch seine andere Gelenkfläche (43', 44') auf der Gelenkfläche (36) des Abstützungsteils (34), wobei die entsprechenden Stützflächen (45a, 45'a und 45b, 45'b) der Hebel (40, 41) geneigt und die Achsen der Gelenkflächen auf den Hebeln (40, 41) so angeordnet sind, daß die drei Gelenkachsen (51, 52, 53) in einer ersten Stellung der Hebel (40, 41), der Spannstellung, fast koplanar sind und daß in einer zweiten Stellung der Hebel (40, 41), der Lösestellung, die mittlere Gelenkachse (52) deutlich außerhalb der durch die beiden anderen Achsen (51, 53) definierten Ebene liegt, wobei die Bewegungen von einer Stellung zur anderen durch Umlegen des ersten Hebels (40) in der einen oder anderen Richtung bis zum Anschlag der entsprechenden Stützflächen (45a, 45'a oder 45b, 45'b) mit dem Handgriff (13) erfolgen.

2. Befestigungseinrichtung nach Patentanspruch 1, dadurch gekennzeichnet, daß der Zwischenträger (25) des röhrenförmigen Stücks (1) aus zwei parallelen Flanschen (24a, 24b) mit Durchbrechungen (26) besteht, in denen sich das röhrenförmige Stück (1) befindet, das mit den Flanschen (24a, 24b) des Zwischenträgers fest verbunden ist, wobei das röhrenförmige Stück (1) und sein Zwischenträger so zwischen den Flanschen (17a, 17b) des festen Trägers (14) angeordnet ist, daß die Flansche (24a, 24b) des Zwischenträgers fast senkrecht auf den Flanschen (17a, 17b) des festen Trägers (14) stehen und das Einspannen des Zwischenträgers (25) im Inneren der Flansche (17) des festen Trägers (14) auf entgegengesetzten Seiten der Flansche (24a, 24b) des Zwischenträgers (25) erfolgt.

3. Befestigungseinrichtung nach Patentanspruch 2, dadurch gekennzeichnet, daß das Einspannen zwischen den Flanschen (17a, 17b) des festen Trägers (14) und der Flansche (24a, 24b) des Zwischenträgers (25) über weiche Kufen (32) erfolgt.

4. Befestigungseinrichtung nach Patentanspruch 2 oder 3, dadurch gekennzeichnet, daß der Zwischenträger (25) Befestigungsteile (27) mit Durchbrechungen für die Spannstange (21) aufweist.

5. Befestigungseinrichtung nach einem der Patentansprüche 1 bis 4, dadurch gekennzeichnet, daß der der Spannvorrichtung gegenüberliegende Anschlag der Spannstange (21) aus einer eventuell selbstsichernden Mutter (31) besteht, die sich auf einem gewindeten Teil (21a) der Spannstange (21) befindet und die Einstellung der Spannung der Spannstange (21) ermöglicht.

6. Befestigungseinrichtung nach Patentanspruch 5, dadurch gekennzeichnet, daß ein die Spannstange (21) umgebendes elastisches Teil (50) zur Erleichterung des Lösens zwischen der Mutter (31) und dem Zwischenträger (25) des röhrenförmigen Stücks (1) eingefügt ist.

7. Befestigungseinrichtung nach Patentanspruch 6, dadurch gekennzeichnet, daß ein elastisches Teil (39) zwischen dem Abstützungsstück (34) und dem entsprechenden Flansch (17a) des festen Trägers eingefügt ist.

8. Befestigungseinrichtung nach einem der Patentansprüche 1 bis 7, falls das röhrenförmige Stück eine durch Schwenken um eine horizontale Achse kontinuierlich einstellbare Kraftfahrzeuglenksäule ist, dadurch gekennzeichnet, daß die Spannstange (21) die Flansche (17a, 17b) des an der Fahrzeugkarosserie befestigten Trägers (14) durch durch Kreisbogen mit Mittelpunkt auf der Schwenkachse (2) der Lenksäule begrenzte Öffnungen (20) durchgreift.

9. Befestigungseinrichtung nach Patentanspruch 1, falls das röhrenförmige Stück eine durch Schwenken und durch teleskopartige Bewegung einer verschiebbaren Welle (62) in einem Säulenkörper (61) einstellbare Lenksäule (60) ist, dadurch gekennzeichnet, daß der Zwischenträger (75) der Säule (60) eine Öffnung zur Aufnahme des Säulenkörpers (61) aufweist, an dem er durch Schweißen in einem Bereich der Länge der Öffnung befestigt ist, und mindestens einen eine nicht auf dem Säulenkörper (61) befestigte und in Höhe einer Öffnung (77) im Säulenkörper (61) angeordnete Spannbacke bildenden Bereich (76), Öffnung (77) die ihm den Durchtritt zum Einspannen des verschiebbaren Rohrs (62) durch elastische Verformung des Zwischenträgers (75) unter der Wirkung der Einspannung durch die Flansche des festen Trägers ermöglicht.

10. Befestigungseinrichtung nach Patentanspruch 9, dadurch gekennzeichnet, daß ein den Säulenkörper (61) durchdringender Keil (78) durch Schweißen auf diesem Säulenkörper (61) befestigt ist, der einen ins Innere des Säulenkörpers (61) ragenden und in eine Öffnung (80) des verschiebbaren Rohres (62) eingreifenden Teil zur Führung dieses Rohrs (62) und zur Momentübertragung zwischen dem verschiebbaren Rohr (62) und dem festen Träger aufweist.

11. Befestigungseinrichtung nach Patentanspruch 1, falls das röhrenförmige Stück eine durch Schwenken und durch teleskopartige Bewegung eines verschiebbaren Rohres (62) in einem Säulenkörper (61) einstellbare Kraftfahrzeuglenksäule ist, dadurch gekennzeichnet, daß der Zwischenträger (85) aus zwei getrennten Stützplatten (85a, 85b) besteht, die jeweils eine der zylindrischen Außenfläche des verschiebbaren Rohres (62) entsprechende und gegenüber einer entsprechenden Aussparung im Säulenkörper (61) angeordnete Druckfläche zur Ausbildung von bei Betätigung der Einspannvorrichtung (72) am verschiebbaren Rohr (62) anliegenden Spannbacken aufweisen.

12. Befestigungseinrichtung nach Patentanspruch 11, dadurch gekennzeichnet, daß ein zwischen den beiden Teilen (85a und 85b) des Zwischenträgers (85) angeordneter Keil (90) einen eine Öffnung des Säulenkörpers (61) frei durchgreifenden und in eine Spalte (80) in der Wand des verschiebbaren Rohres (62) eingreifenden Keilverbindungsvorsprung (90a) zur axialen Führung des verschiebbaren Rohres (62) und zur direkten Aufnahme des Momentes zwischen dem verschiebbaren Rohr (62) und der Fahrzeugkarosserie mittels des festen Trägers (82) aufweist.

**Claims**

1. A fixing device for a tubular member, such as a vehicle steering column (1) which can be continuously adjusted by pivoting and/or telescopic axial displacement, comprising a support (14) having means (15, 16) for its rigid attachment to a fixed part, such as the bodywork of a vehicle, and formed by two substantially parallel flanges (17) so interconnected at one of their ends as to form a U-shaped structure deformable by moving the flanges (17) towards or away from one another, ensuring the fixing of the tubular member (1) by the clamping of an intermediate support (25) through which the tubular member (1) extends, by means of a tie rod (21) extending through the lateral flanges (17) in a transverse direction and having two bearing stops (29, 31) at its ends situated outside and on either side of the lateral flanges (17), and by means of at least one clamping device controlled by a handle (13) bearing against one (29) of the stops and against the external face of the corresponding flange (17) to move the flanges (17a, 17b) towards one another in the transverse direction or, on the other hand, to enable them to be moved apart by resilient return, characterized in that the clamping device is constructed in the form of a bistable toggle joint having three parallel hingeing axes (51, 52, 53) perpendicular to the axial direction of the tie rod (21), and is formed by two levers (40, 41) perforated throughout their thickness and threaded with clearance on the tie rod (21) in succession between one end of such tie rod comprising a stop (29) having a hingeing surface and a member (34) which bears against the lateral flange (17a) and is threaded on to the tie rod (21) and comprises a hingeing surface directed oppositely from such lateral flange (17a), each of the levers (40, 41) comprising on one of their faces transverse in relation to the axis of the tie rod (21) a (male or female) hingeing surface (44, 44') and on their other transverse face another (male or female) hingeing surface (43, 43') and each of their opposite faces comprising two flat bearing surfaces (45a, 45b and 45'a, 45'b) each adapted to cooperate with a corresponding surface of the other lever; the first, outer lever being integral with the operating handle and being freely engaged via one of its (male or female) hingeing surfaces (43, 44) with the hingeing surface (29) of the tie rod (21) and via its other hingeing surface (43, 44) with the corresponding hingeing surface (43', 44') of the second lever (41); the second lever (41) being freely engaged via one of its (male or female) hingeing surfaces (43', 44') with the corresponding hingeing surface (43, 44) of the first lever (40) and via its other hingeing surface (43', 44') with the hingeing surface (36) of the bearing member (34); and the corresponding bearing surfaces (45a, 45'a and 45b, 45'b) of the levers (40, 41) being inclined and the axes of the hingeing surfaces being so arranged on the levers (40, 41) that in a first bearing position of the levers (40, 41) or clamping arrangement the three hingeing axes (51, 52, 53) are substantially coplanar, while in a second bearing position of the levers (40, 41) or unclamped position the intermediate hingeing axis (52) is clearly outside the plane defined by the other two axes (51, 53), the movements from one position to the other being obtained by the tilting of the first lever (40) in one direction or the other by means of the handle (13) until the corresponding bearing surfaces (45a, 45'a or 45b, 45'b) abut one another.

2. A fixing device according to claim 1, characterized in that the intermediate support (25) of the tubular member (1) is formed by two parallel flanges (24a, 24b) formed with openings (26) in which the tubular member (1) engages which is rigidly fixed to the flanges (24a, 24b) of the intermediate support, the tubular member (1) and its intermediate support being so engaged between the flanges (17a, 17b) of the fixed support (14) that the flanges (24a, 24b) of the intermediate support are substantially perpendicular to the flanges (17a, 17b) of the fixed support (14) and the clamping of the intermediate support (25) inside the flanges (17) of the fixed support (14) is performed on the opposite sides of the flanges (24a, 24b) of the intermediate support (25).

3. A fixing device according to claim 2, characterized in that the clamping between the flanges (17a, 17b) of the fixed support (14) and the flanges (24a, 24b) of the intermediate support (25) takes place via flexible shoes (32).

4. A fixing device according to claims 2 or 3, characterized in that the intermediate support (25) comprises lugs (27) formed with openings through which the tie rod (21) extends.

5. A fixing device according to any of claims 1 to 4, characterized in that the stop of the tie rod (21) opposite the clamping device is formed by a nut (31) which can be self-locking and engages on a screwthreaded portion (21a) of the tie rod (21) to enable the tensioning of the tie rod (21) to be adjusted.

6. A fixing device according to claim 5, characterized in that a resilient member (50) enclosing the tie rod (21) is inserted between the nut (31) and the intermediate support (25) of the tubular member (1) so as to facilitate unclamping.

7. A fixing device according to claim 6, characterized in that a resilient member (39) is inserted between the bearing member (34) and the corresponding flange (17a) of the fixed support (14).

8. A fixing device according to any of claims 1 to 7, wherein the tubular member is a vehicle steering column which can be continuously adjusted by pivoting around a horizontal axis, characterized in that the tie rod (21) extends through the flanges (17a, 17b) of the support (14) fixed to the vehicle bodywork via apertures (20) bounded by arcs of a circle centred on the pivoting axis (2) of the steering column.

9. A fixing device according to claim 1, wherein the tubular member is a vehicle steering column (60) which can be adjusted by pivoting and telescopic displacement of a shaft (62) sliding in a column casing (61), characterized in that the intermediate support (75) of the column (60) comprises an opening for receiving the column casing (61), to which it is fixed by welding over a portion of the length of the opening and at least one portion (76) forming a clamping jaw which is not fixed to the column casing (61) and is disposed in the region of an opening (77) in the column casing (61), allowing the latter to pass through the opening to clamp the sliding tube (62) by the resilient deformation of the intermediate support (75) under the clamping action of the flanges of the support.

10. A fixing device according to claim 9, characterized in that a key (78) is fixed by welding to the column casing (61) transversely in relation thereto and comprises a portion which is directed towards the inside of the column casing (61) and is engaged in an opening (80) of the sliding tube (62) so as to guide such tube (62) and transmit the torque between the sliding tube (62) and the fixed support.

11. A fixing device according to claim 1, wherein the tubular column is a vehicle steering wheel which can be adjusted by pivoting and telescopic displacement of a tube (62) sliding in a colum casing (61), characterized in that the intermediate support (85) is formed by two separate bearing plates (85a, 85b) each comprising a bearing surface corresponding to the external cylindrical surface of the sliding tube (62), positioned opposite a corresponding cut-out in the column casing (61), so as to form clamping jaws coming into contact with the sliding tube (62) when the clamping device (72) is operated.

12. A fixing device according to claim 11, characterized in that a key (90) disposed between the two portions (85a and 85b) of the intermediate support (85) comprises a keying projection (90a) extending freely through an opening in the column casing (61) and engaged in a slot (80) extending through the wall of the sliding tube (62) to guide the sliding tube (62) axially and directly absorb the torque between the sliding tube (62) and the vehicle bodywork by means of the fixed support (82).

FIG.1

22

14

6α

B

12

20

13

17

1

5

3

B

0 222 628

4

3

3

8

1a

1

6

18

21

10

8

2

5

11

15

16

12

FIG.2

4

3

13

# FIG. 3

FIG. 4a

FIG. 5a

FIG. 6a

FIG. 7a    FIG. 7b

FIG. 4b

FIG. 5b

FIG. 6b

0 222 628

FIG.8a

FIG.8b

FIG.8c

FIG.9

FIG. 11a

FIG.11

FIG.10

A

61

62 69 68

71

0 222 628

11

67 66 65

80

FIG.12

82

72

A

FIG.14

FIG.14a

FIG.13